# EUROPÄISCHE PATENTANMELDUNG

(11) **EP 3 683 858 A1**
(43) Veröffentlichungstag der Anmeldung: **22.07.2020**
(21) Anmeldenummer: 19177214.4
(22) Anmeldetag: 29.05.2019
(51) Int. Cl.: H01M 2/02, B62M 6/90, H01M 2/10, B60K 1/04, B60L 53/80

(54) **IMPLEMENTIERUNGSSTRUKTUR UND ELEKTROFAHRZEUG MIT EINER IMPLEMENTIERUNGSSTRUKTUR**

(30) Priorität: 03.05.2019 EP 19172509; 15.05.2019 EP 19174581; 15.01.2019 CN 201920062647 U
(71) Anmelder: Prophete GmbH & Co. KG, 33378 Rheda-Wiedenbrück (DE)
(72) Erfinder: Repp, Eugen, 33397 Rietberg (DE); Hilger, Peter, 23683 Scharbeutz (DE)
(74) Vertreter: Schleitzer, Dirk-Karsten

(57) **Zusammenfassung**

Dargestellt und beschrieben ist eine Implementierungsstruktur zum Integrieren eines Batteriegehäuses (2) in ein Rohrprofil (3) eines Fahrzeugrahmens eines Elektrofahrzeuges, insbesondere zum Integrieren eines Batteriegehäuses (2) in ein Rohrprofil (3) eines Elektrofahrrades, weiter insbesondere in ein Unterrohr (1) des Elektrofahrrades, mit einem Rohrprofil (3) und einem Batteriegehäuse (2), wobei das Rohrprofil (3) einen Aufnahmeraum (5) für das Batteriegehäuse (2) bildet und das Batteriegehäuse (2) über eine Aussparung (7) des Rohrprofils (3) als Entlade- und Beladeöffnung in den Aufnahmeraum (5) einbringbar ist. Erfindungsgemäß ist vorgesehen, dass sich die Aussparung (7) zum Einsetzen des Batteriegehäuses (2) über lediglich einen freigeschnittenen Längskantenbereich (13) erstreckt.

## Beschreibung

Die Erfindung betrifft eine Implementierungsstruktur zum Integrieren eines Batteriegehäuses in ein Rohrprofil eines Fahrzeugrahmens eines Elektrofahrzeuges, insbesondere zum Integrieren eines Batteriegehäuses in ein Rohrprofil eines Elektrofahrrades, weiter insbesondere in ein Unterrohr des Elektrofahrrades, mit einem Rohrprofil und einem Batteriegehäuse, wobei das Rohrprofil einen Aufnahmeraum für das Batteriegehäuse bildet und das Batteriegehäuse über eine Aussparung des Rohrprofils als Entlade- und Beladeöffnung in den Aufnahmeraum einbringbar ist. Darüber hinaus betrifft die Erfindung ein Elektrofahrzeug, insbesondere ein Elektrofahrrad oder einen Elektroscooter bzw. Elektroroller, mit einer Implementierungsstruktur der vorgenannten Art.

Elektrofahrzeuge weisen einen Fahrzeugrahmen und einen Elektromotor auf, der üblicherweise zum Antreiben eines Rades oder mehrerer Räder direkt oder indirekt mit diesem verbunden ist. Bei Elektrofahrzeugen, wie beispielsweise Elektrofahrräder oder Elektrorollern, ist die zum Betreiben des Elektromotors erforderliche Traktionsbatterie (Akku) dabei an einem statischen Abschnitt des Fahrzeuges, wie zum Beispiel an einem Rahmen oder einem Gepäckträger, montiert. Bei Elektrofahrrädern beispielsweise ist die Anordnung der Batterie im Bereich eines Unterrohrs des Fahrradrahmens vorteilhaft, da hierdurch ein verhältnismäßig tiefer Schwerpunkt des Fahrrades gewährleistet werden kann. Dies hat insbesondere auf die Fahrdynamik und das Fahrverhalten des Fahrrads positive Auswirkungen.

Aus dem Stand der Technik ist bereits bekannt, die Batterie auf einem Unterrohr zu befestigen. Ein an oder auf einem Rahmenteil befestigtes Batteriegehäuse wirkt sich aber negativ auf das Design des Fahrrads aus und wird vom Benutzer als optisch nicht ansprechend empfunden. Ein weiterer Nachteil ist, dass an der jeweiligen Anbringstelle andere Komponenten, wie beispielsweise eine Halterung für Getränkeflaschen, ein Fahrradschloss oder ein Transportkorb, nicht mehr befestigt werden können.

Aus diesem Grund sieht der Stand der Technik weiter vor, die Batterie in den Fahrzeugrahmen, im Falle eines Fahrrads in den Fahrradrahmen, insbesondere in ein Unterrohr des Fahrradrahmens, zu integrieren. Das Unterrohr weist dafür einen Aufnahmeraum zur Aufnahme der Batterie bzw. des Akkus auf. Entsprechende Rohrprofile eines Fahrradrahmens weisen in der Regel einen im Wesentlichen rechteckigen Querschnitt auf. Der Aufnahmeraum für das Batteriegehäuse ist dabei über eine Aussparung des Rohrprofils als Entlade- und Beladeöffnung ausgebildet. Die Aussparung zum Einsetzen der Batterie erstreckt sich über einen freigeschnittenen Bereich des Rohrprofils. Die in ein Rohrprofil integrierte Batterie bietet den Vorteil, dass die Batterie nicht sichtbar ist, so dass ein positiv anmutendes Erscheinungsbild des Fahrzeuges erreicht werden kann. Bei der Integration der Batterie in ein Unterrohr eines Elektrofahrrades ist darüber hinaus ein tiefer Schwerpunkt des Fahrrads sichergestellt, der die Fahreigenschaften des Fahrrades positiv beeinflusst. Für einen Zugang zum Aufnahmeraum für die Batterie wird das Rohrprofil in der Regel großflächig aus- bzw. freigeschnitten, was zu einer Schwächung des Rohrprofils und einer Verschlechterung der mechanischen Festigkeit führt. Durch einen höheren Materialeinsatz im Bereich der nicht-freigeschnittenen Bereiche des Rohrprofils wird versucht, die Bauteilstabilität zu erhöhen. Aus diesem Grund sind die nicht-freigeschnittenen Bereiche des Rohrprofils in der Regel mit einer größeren Wandstärke versehen, wodurch das Bauteilgewicht und die Materialkosten steigen. Alternativ sind in dem Profilabschnitt Verstärkungsstrukturen, wie beispielsweise Stahleinlagen oder Rippenstrukturen, notwendig, die sich ebenfalls nachteilig auf das Fahrzeuggewicht auswirken und zu einem höheren Aufwand bei der Herstellung des Rohrprofils führen.

Es ist Aufgabe der vorliegenden Erfindung, eine Implementierungsstruktur zum Integrieren eines Batteriegehäuses in ein Rohrprofil eines Fahrzeugrahmens eines Elektrofahrzeuges, insbesondere zum Integrieren eines Batteriegehäuses in ein Rohrprofil eines Elektrofahrrades, und ein Elektrofahrzeug mit einer solchen Implementierungsstruktur zur Verfügung zu stellen, wobei das Rohrprofil im Bereich des integrierten Batteriegehäuses eine hohe mechanische Stabilität bei geringem Materialeinsatz bzw. bei geringer Wandstärke aufweisen soll. Gleichzeitig soll ein für den Benutzer ansprechendes Erscheinungsbild des Fahrzeugrahmens erreicht werden. Des Weiteren sollen ein einfaches Einsetzen und eine einfache Entnahme des Batteriegehäuses möglich sein.

Die vorgenannte Aufgabe wird durch eine Implementierungsstruktur mit den Merkmalen von Anspruch 1 und durch ein Elektrofahrzeug mit den Merkmalen von Anspruch 21 gelöst. Vorteilhafte Ausgestaltungen der Erfindung sind Gegenstand der Unteransprüche.

Erfindungsgemäß ist vorgesehen, dass sich die Aussparung zum Einsetzen des Batteriegehäuses über lediglich einen aus- bzw. freigeschnittenen Längskantenbereich des Rohrprofils erstreckt. Durch die Freischneidung lediglich eines Längskantenbereichs wird eine hohe Stabilität und Steifigkeit des Rohrprofils erreicht.

In Längsrichtung angrenzend an den freigeschnittenen Längskantenbereich ist das Rohrprofil dagegen in Umfangsrichtung vorzugsweise zumindest im Wesentlichen als Vollprofil ausgebildet. Das Rohrprofil weist angrenzend an den freigeschnittenen Längskantenbereich vorzugsweise einen polygonalen n-eckigen Querschnitt auf, wobei n größer oder gleich drei ist.

Bevorzugt weist das ungeschwächte Rohrprofil angrenzend zum aus- bzw. freigeschnittenen Längskantenbereich einen im Wesentlichen spiegelsymmetrischen Querschnitt auf. Damit kann eine hohe Stabilität der Rahmenkonstruktion erreicht werden.

Die Erstreckung des "freigeschnittenen Längskantenbereichs" wird erfindungsgemäß unter Bezugnahme auf ein Referenzprofil definiert, das durch zwei in einer Querschnittsansicht an die Außenkontur des Rohrprofils im Bereich des freigeschnittenen Längskantenbereichs gelegte vertikale geradlinige Begrenzungslinien und zwei an die Außenkontur des Rohrprofils gelegte horizontale geradlinige Begrenzungslinien gebildet wird. Das Referenzprofil weist dann eine viereckige, vorzugsweise rechteckige, Konturlinie auf. Das Referenzprofil wird dabei tangential an das Rohrprofil gelegt, so dass das Referenzprofil die maximale Erstreckung des Rohrprofils in vertikaler und horizontaler Richtung umfasst. Das Referenzprofil ist also eine virtuell an das Rohrprofil angelegte Kontur, wobei das Referenzprofil das Rohrprofil nach außen begrenzt. Das Rohrprofil liegt somit in der Querschnittsansicht im Wesentlichen vollständig innerhalb des Referenzprofils und bildet wenigstens vier Berührungspunkte mit dem Referenzprofil aus. Im Folgenden wird somit zwischen dem Rohrprofil einerseits und dem Referenzprofil andererseits unterschieden.

Erfindungsgemäß erstreckt sich die Aussparung in dem Rohrprofil lediglich über einen Eckbereich des Referenzprofils. In einer Querschnittsansicht wird die Aussparung in Umfangsrichtung in der einen Richtung begrenzt durch einen ersten Längsrand des Rohrprofils und in der anderen Richtung durch einen zweiten Längsrand des Rohrprofils. Zwischen dem ersten und dem zweiten Längsrand lässt sich das Batteriegehäuse in die Aussparung einsetzen. Eine in der Querschnittsansicht an den ersten Längsrand des Rohrprofils gelegte vertikale Tangente schneidet eine horizontale Begrenzungslinie eines dem freigeschnittenen Längskantenbereich des Rohrprofils gegenüberliegenden Eckbereichs des Referenzprofils und eine an den zweiten Längsrand des Rohrprofils gelegte horizontale Tangente schneidet eine vertikale Begrenzungslinie des Eckbereiches. Die Aussparung erstreckt sich somit bezogen auf die Begrenzungslinien des Referenzprofils zwischen diesen Schnittpunkten und somit lediglich über einen Eckbereich des Referenzprofils. Auf das Referenzprofil bezogen, kann das Batteriegehäuse beispielsweise über lediglich einen linken oder rechten oberen oder unteren Eckbereich des Referenzprofils in die Aussparung einbringbar sein.

Vorzugsweise erstreckt sich die Aussparung nicht über die gesamte Querschnittshöhe und/oder die gesamte Querschnittsbreite des Rohrprofils. Bezogen auf die Schnittpunkte der zuvor beschriebenen Tangenten, die die Aussparung in einer Querschnittsansicht des Rohrprofils seitlich begrenzen, mit jeweils einer Begrenzungslinie eines dem freigeschnittenen Längskantenbereich des Rohrprofils gegenüberliegenden Eckbereichs des Referenzprofils, erstreckt sich die Aussparung somit lediglich über eine Teillänge der horizontale Begrenzungslinie eines Eckbereichs des Referenzprofils und/oder über eine Teillänge der vertikalen Begrenzungslinie des Eckbereichs. Die Aussparung im Rohrprofil erstreckt sich somit lediglich über einen Teil der Gesamthöhe und/oder lediglich über einen Teil der Gesamtbreite des Referenzprofils.

Die Aussparung wird in einer Querschnittsansicht des Rohrprofils in Umfangrichtung begrenzt von zwei angrenzenden nicht-freigeschnittenen Längskantenbereichen des Rohrprofils, wobei ein nicht-freigeschnittener Längskantenbereich durch zwei ineinander übergehende zueinander abgewinkelte oder abgebogene Wandabschnitte des Rohrprofils gebildet wird. Ein nicht-freigeschnittener Längskantenbereich im Sinne der Erfindung kann insbesondere dann vorliegen, wenn zwei aneinander angrenzende Längsflächen bzw. Wandabschnitte des Rohrprofils über einen Innenwinkel von 80° bis 135°, weiter bevorzugt von 85° bis 120°, bevorzugt von 90° bis 115°, zueinander abgeknickt oder abgebogen sind, was auch gewölbte Kanten und/oder Längsflächen einschließt. Jeder nicht-freigeschnittene Längskantenbereich weist einen abgewinkelten oder abgebogenen Randstreifen auf, der sich bis zur Aussparung erstreckt. Das Rohrprofil ist somit an den Längsseiten, über die sich die Ausnehmung erstreckt, nicht vollständig freigeschnitten, sondern es ist an beiden Längsseiten ein Randstreifen des Rohrprofils vorgesehen, was zur Erhöhung der Bauteilsteifigkeit beiträgt.

Das Verhältnis der Breite bzw. Höhe dieses Randstreifens zur Breite bzw. Höhe der Aussparung kann zwischen 0,2 und 0,75, vorzugsweise zwischen 0,25 und 0,5, betragen. Damit weist der Randstreifen eine ausreichende Erstreckung in Umfangsrichtung auf, um eine hohe Stabilität und Steifigkeit des Rohrprofils im Bereich der Aussparung sicherstellen zu können. Bei einer bevorzugten Ausführungsform kann auf einer ersten Längsseite des Rohrprofils das Verhältnis der Breite bzw. Höhe eines die Aussparung begrenzenden ersten Randstreifens des Rohrprofils zur Breite bzw. Höhe der Aussparung im Bereich zwischen 0,25 und 0,35, vorzugsweise bei ca. 0,3, liegen, während das Verhältnis der Breite bzw. Höhe eines die Aussparung begrenzenden zweiten Randstreifens auf der angrenzenden zweiten Längsseite des Rohrprofils zwischen 0,4 und 0,6, vorzugsweise ca. 0,5, betragen kann.

Der Randstreifen kann zur Erhöhung der Steifigkeit des Rohrprofils eine Verstärkung aufweisen, beispielsweise in Form einer Materialverdickung, durch Ausbildung einer Rippenstruktur oder durch ein mit dem Rohrprofil fest verbundenes Auf- bzw. Einlegeteil.

Für ein einfache Einsetzen des Batteriegehäuses kann es von Vorteil sein, wenn die Ausnehmung im Querschnitt einen im Wesentlichen L-förmigen Verlauf aufweist.

Es ist zweckmäßig, wenn das Batteriegehäuse über die Aussparung in dem Rohrprofil zumindest auch seitlich und, vorzugsweise, von oben oder von unten in den Aufnahmeraum einsetzbar ist. Ein wenigstens teilweises seitliches Einsetzen des Batteriegehäuses vereinfacht den Zugang zum Aufnahmeraum. Zum Einsetzen des Batteriegehäuses in ein Unterrohr eines Fahrradrahmens wird somit kein wesentlicher Freiraum oberhalb des Unterrohrs benötigt.

Bei einer weiter bevorzugten Ausführungsform der Erfindung ist vorgesehen, dass das Batteriegehäuse durch Drehung um eine Längsachse des Batteriegehäuses in den Aufnahmeraum einschwenkbar ist. Das Eindrehen des Batteriegehäuses in den Aufnahmeraum erfolgt dabei über eine linke oder rechte Längsseite und die obere Längsseite oder die unter Längsseite des Rohrprofils, also über lediglich zwei Längsseiten. Somit ist eine stabile Ausbildung des Rohrprofils erreichbar. Gleichzeitig benötigt das Einschwenken des Batteriegehäuses in den Aufnahmeraum lediglich einen geringen Platzbedarf oberhalb des Rohrprofils.

Unter einem Eindrehen seitlich und von oben oder seitlich und von unten ist das Eindrehen über zwei Raumseiten bezogen auf das Referenzprofil zu verstehen, wobei der Drehwinkel beim Eindrehen des Batteriegehäuses, d.h. der Schwenkwinkel des Batteriegehäuses zwischen einer Entnahmestellung und einer Stellung, in der das Batteriegehäuse vollständig in das Rohrprofil eingesetzt und die Aussparung in dem Rohrprofil vorzugsweise vollständig verschlossen ist, vorzugsweise zwischen 30° und 100°, weiter vorzugsweise zwischen 45° und 90°, besonders bevorzugt zwischen 50° und 80°, betragen kann.

Es ist zweckmäßig, wenn das Batteriegehäuse eine erste Scharniergeometrie und das Rohrprofil eine zweite Scharniergeometrie aufweisen und durch Aufsetzen und/oder Anlegen der Scharniergeometrien eine vorzugsweise lösbare Profilform-Scharnierverbindung ausgebildet wird. Vorzugsweise wird die Scharnierverbindung nach Art eines Scharniergelenks ausgebildet, wobei eine Scharniergeometrie einen walzenförmigen Gelenkkopf aufweist, der zangenförmig in einem rinnenartigen Gelenkpfannenabschnitt der zweiten Scharniergeometrie geführt wird, der dem Segment eines Hohlzylinders entsprechen kann. Die Scharniergeometrien sind dabei so ausgestaltet, dass beim Anlegen der Längskanten des Rohrprofils und des Batteriegehäuses gegeneinander eine freie gelenkige Verbindung zwischen den beiden Bauteilen ausgebildet wird, ohne dass das Rohrprofil und das Batteriegehäuse über eine starre Achse miteinander verbunden sind. Auf diese Weise wird eine einfache Führung der Einsetzbewegung des Batteriegehäuses in den Aufnahmeraum realisiert.

Beim Einsetzen des Batteriegehäuses in den Aufnahmeraum wird zunächst die Scharniergeometrie an dem Batteriegehäuse mit der Scharniergeometrie an dem Rohrprofil in Wirkverbindung gebracht. Dies erfolgt beispielsweise durch Aufsetzen einer Scharniernut an einer Längskante des Batteriegehäuses in eine Scharnierrippe an einer Längskante des Rohrprofils oder umgekehrt. Das Batteriegehäuse befinden sich dann in einer noch nicht eingesetzten Stellung relativ zum Rohrprofil.

Nach dem Aufsetzen des Batteriegehäuses auf das Rohrprofil im Bereich der Scharniergeometrien kann das Batteriegehäuse relativ zum Rohrprofil verschwenkt werden, bis das Batteriegehäuse in die Außenkontur des Rohrprofils, also in den Aufnahmeraum, eingefügt ist. In dieser Schließstellung kann dann eine weitere Längsseite des Batteriegehäuses form- und/oder kraft- bzw. reibschlüssig mit einem zweiten, die Aussparung begrenzenden nicht-freigeschnittenen Längskantenbereich des Rohrprofils verbunden und, vorzugsweise, fixiert sein. Auch die Ausbildung einer Rastverbindung oder Kompressionsverbindung zwischen den Bauteilen ist möglich und von Vorteil.

Bevorzugt weist der an die Aussparung angrenzende Längsrand von wenigstens einem nicht-freigeschnittenen Längskantenbereich eine Scharniergeometrie an seiner Innenkante zur Ausbildung einer Profilform-Scharnierverbindung mit einer komplementär ausgebildeten Scharniergeometrie an einer Außenkante des Batteriegehäuses auf.

Auch kann wenigstens ein nicht-freigeschnittener Längskantenbereich insbesondere an seinem an die Aussparung angrenzenden Innenrand eine Materialverdickung und/oder Versteifungsrippen und/oder eine Materialeinlage oder -auflage zur Erhöhung der mechanischen Steifigkeit aufweisen. Durch eine lokale Verstärkungsstruktur kann das Rohrprofil mechanisch verstärkt werden. Eine Verstärkung des gesamten Rohrprofils ist dabei vorzugsweise nicht erforderlich, um eine ausreichende Stabilität und Steifigkeit des Rohrprofils und des Rahmens sicherzustellen.

In einer vorteilhaften Ausführungsform der Erfindung kann das Rohrprofil zur Erhöhung der Bauteilsteifigkeit auf wenigstens einer Längsseite, vorzugsweise lediglich auf einer Unterseite, eine höhere Wanddicke und/oder eine Versteifungsgeometrie und/oder eine Materialeinlage- oder auflage aufweisen. Auf diese Weise kann eine besonders stabile Konstruktion bzw. Gestaltung des Rohrprofils bei einem geringen Materialeinsatz erreicht werden, indem die Bauteilsteifigkeit an den Stellen höchster Belastungen verstärkt wird.

Bei einer anderen bevorzugten Ausführungsform weist das Rohrprofil zwei im Inneren des Rohrprofils angeordnete Befestigungssitze für das Batteriegehäuse auf, die in Längsrichtung des Rohrprofils voneinander beabstandet sind. Die Befestigungssitze begrenzen vorzugsweise zusammen mit dem Rohrprofil den Aufnahmeraum für das Batteriegehäuse. Die Befestigungssitze begrenzen den Aufnahmeraum somit in Längsrichtung des Rohrprofils. Das Batteriegehäuse kann über den freigeschnittenen Längskantenbereich des Rohrprofils in den Aufnahmeraum eingesetzt werden. Auf diese Weise kann eine sehr kleine Öffnung zum Einsetzen in den Aufnahmeraum und/oder zur Entnahmen des Batteriegehäuses aus dem Aufnahmeraum realisiert werden. Gleichzeitig ist das Batteriegehäuse im eingesetzten Zustand auch in Längsrichtung relativ zum Rohrprofil gesichert.

Die Befestigungssitze verschließen den Querschnitt des Rohrprofils vorzugsweise lediglich teilweise, so dass der Aufnahmeraum auch in Längsrichtung des Rohrprofils teilweise offen ausgebildet ist. Dies ist insbesondere vorteilhaft, um Kabel zum Batteriegehäuse hin- bzw. vom Batteriegehäuse wegzuführen. Auf diese Weise können auch Kabel durch den Aufnahmeraum verlegt werden, beispielsweise um eine Lichtquelle mit Strom zu versorgen oder um eine Bremseinrichtung betätigen zu können.

Der Aufnahmeraum selbst ist zur Aufnahme des Batteriegehäuses vorzugsweise im Wesentlichen einbautenfrei ausgebildet. Im Aufnahmeraum kann allerdings beispielsweise ein Anschlussstecker zur elektrischen Verbindung mit der Batterie vorgesehen sein. Es ist jedoch auch möglich, die elektrische Verbindung mit der Batterie über die Befestigungssitze zu realisieren.

Konstruktiv kann der Befestigungssitz eine beispielsweise quer zur Längsrichtung des Rohrprofils mit dem Rohrprofil verbundene Befestigungsplatte und/oder wenigstens einen vorzugsweise einstückig mit der Befestigungsplatte ausgebildeten Positionierstift aufweisen. Zwei Positionierstifte der beiden Befestigungssitze können dabei gegenüberliegend und/oder aufeinander zu gerichtet sein. Die Positionierstifte können die Einsetzbewegung des Batteriegehäuses in den Aufnahmeraum unterstützen und/oder als Führung bei der Einsetzbewegung des Batteriegehäuses dienen. Ebenso können die Positionierstifte die Entnahmebewegung des Batteriegehäuses unterstützen und/oder führen.

Weiter vorteilhaft ist eine relativ zum Rohrprofil bewegbar ausgebildete Profilabdeckung zum Öffnen und Verschließen des Aufnahmeraums vorgesehen. Die Profilabdeckung ist dabei vorzugsweise als separates Bauteil ausgebildet, kann aber auch durch einen Teil des Batteriegehäuses gebildet sein. Es ist besonders vorteilhaft, wenn die Profilabdeckung lösbar und/oder relativ zum Rohrprofil schwenkbar ausgebildet ist. Mit Hilfe der Profilabdeckung kann der Aufnahmeraum im Wesentlichen vollständig und insbesondere spritzwassergeschützt verschlossen werden. Die Profilabdeckung übernimmt somit eine Schutzfunktion für das eingesetzte Batteriegehäuse. Die Profilabdeckung und das Rohrprofil bestehen dabei vorzugsweise aus dem gleichen Material und/oder weisen die gleiche Beschaffenheit auf, insbesondere eine gleiche Oberflächenbeschaffenheit. Insbesondere können dabei die Profilabdeckung und das Rohrprofil die gleiche Farbe und/oder Lackierung und/oder Haptik aufweisen, um ein einheitliches ansprechendes Erscheinungsbild des Fahrzeugrahmens zu erzielen.

In einer vorteilhaften Ausführungsform lässt sich der Aufnahmeraum mit der Profilabdeckung im Wesentlichen vollständig gegenüber der Umgebung verschließen. Dabei können die Außenfläche von wenigstens einem nicht-freigeschnittenen Längskantenbereich des Rohrprofils und eine im Schließzustand anliegende Längskantenfläche der Profilabdeckung ausgefluchtet sein. Quer zur Längsrichtung und/oder in Längsrichtung des Rohrprofils lässt sich der Aufnahmeraum somit vollständig schließen. Insbesondere ist der Aufnahmeraum wenigstens spritzwasserdicht, vorzugsweise wasserdicht, ausgebildet. Auf diese Weise kann sichergestellt werden, dass das Batteriegehäuse im eingesetzten Zustand nicht mit Schmutz oder Wasser in Kontakt geraten kann.

Bevorzugt ist die Profilabdeckung zerstörungsfrei lösbar oder auch unlösbar mit dem Batteriegehäuse verbunden oder ein Gehäusebereich des Batteriegehäuses bildet die Profilabdeckung aus. Die Profilabdeckung kann mit dem Batteriegehäuse verklebt und/oder verschweißt und/oder verschraubt sein. Das Batteriegehäuse ist dabei vorzugsweise im Wesentlichen rohrförmig ausgebildet. Das Batteriegehäuse ist zur Aufnahme einer Traktionsbatterie bzw. eines Energiespeichers zum Antrieb des Elektrofahrzeugs ausgebildet. Sind die Profilabdeckung und das Batteriegehäuse miteinander verbunden, so wird der Aufnahmeraum beim Einsetzen des Batteriegehäuses gleichzeitig durch die Profilabdeckung verschlossen. Das Einsetzen der Batterie und das Verschließen des Aufnahmeraums mit der Profilabdeckung erfolgt somit in lediglich einem einzigen Arbeitsschritt.

Beim Einfügen der Profilabdeckung in die Aussparung des Rohrprofils bzw. beim Einsetzen des Batteriegehäuses in den Aufnahmeraum kann zunächst eine Scharniergeometrie an dem Batteriegehäuse mit einer Scharniergeometrie an dem Rohrprofil in Wirkverbindung gebracht werde, um eine freie Gelenkverbindung auszubilden. Dies erfolgt beispielsweise durch Aufsetzen einer Scharniernut an einer Längskante des Batteriegehäuses in eine Scharnierrippe an der Längskante des Rohrprofils. Die Profilabdeckung bzw. das Batteriegehäuse befinden sich dann in einer noch nicht geschlossenen Stellung.

Die Längskante an dem Rohrprofil kann bereichsweise nach innen gerichtet sein und eine langgestreckte Rippe ausbilden, die mit einer komplementären Scharniernut an der Längskante des Batteriegehäuses zusammenwirkt, um eine gelenkige, lösbare Verbindung zwischen dem Rohrprofil und dem Batteriegehäuse auszubilden. Zur Ausbildung einer Scharnierrippe kann die Längskante im Querschnitt des Rohrprofils nach innen gerichtet sein. Eine Längskante an dem Rohrprofil kann eine konkave oder konvexe Wölbung als Scharniersitz für eine komplementär ausgebildete Längskante an dem Batteriegehäuse ausbilden. Die Scharniergeometrie an dem Batteriegehäuse kann sich über die gesamte Länge des Batteriegehäuses erstrecken. Die Scharniergeometrie an dem Rohrprofil kann sich ebenfalls über die gesamte Länge der Aussparung erstrecken. Alternativ ist es auch möglich, dass sich die Scharniergeometrien lediglich abschnittsweise über die Längsseiten erstrecken.

Alternativ kann auch eine feste Scharnierverbindung zwischen dem Rohrprofil und der Profilabdeckung vorgesehen sein, wobei das Rohrprofil und die Profilabdeckung über eine feste Achse als weiteres Bauteil miteinander verbunden sind. Das Batteriegehäuse kann dann bei geöffneter Profilabdeckung in den Aufnahmeraum eingesetzt werden. Anschließend kann dann die Profilabdeckung geschlossen werden, um die Batterie vor (Spritz-)Wasser und Schmutz zu schützen. Grundsätzlich ist auch ein Festkörpergelenk oder eine federgelenkige Verbindung zwischen dem Rohrprofil und der Profilabdeckung nicht ausgeschlossen. Alternativ kann zum Einsetzen des Batteriegehäuses dieses zunächst mit der Profilabdeckung verbunden werden und durch das Schließen der Profilabdeckung in den Aufnahmeraum eingesetzt werden.

Bevorzugt weist das Batteriegehäuse zwei Aufnahmesitze auf, die mit den Befestigungssitzen des Rohrprofils zusammenwirken, wobei die Aufnahmesitze stirnseitig am Batteriegehäuse angeordnet und/oder ausgebildet und/oder angebracht sind. Der Aufnahmesitz kann aus einem separaten stirnseitigen Gehäuseteil des Batteriegehäuses gebildet sein, das mit einem langgestreckten, mittleren Gehäuseteil verbunden ist, das den Gehäusemantel bildet. An dem stirnseitigen Gehäusesteil und an dem mittleren Gehäuseteil kann jeweils eine gleiche Scharniergeometrie ausgebildet sein, beispielsweise eine Ausformung und/oder Anformung, wobei sich die Scharniergeometrie an dem mittleren Gehäuseteil über dessen gesamte Länge erstrecken kann. Im montierten Zustand der Gehäuseteile ergibt sich dann eine über die gesamte Länge des Batteriegehäuses erstreckende durchgehende, unterbrechungslose bzw. glatte Scharniergeometrie. Diese Scharniergeometrie kann dann beispielsweise eine Scharniernut ausbilden, die um eine längliche Scharnierrippe an dem Rohrprofil bewegbar bzw. schwenkbar ist. Die Aufnahmesitze unterstützen somit die Einsetzbewegung des Batteriegehäuses und können zu einer geführten Einsetzbewegung beitragen.

In einer bevorzugten Ausführungsform ist eine Kulissenführung des Batteriegehäuses vorgesehen. Beispielswiese kann eine Kulissenführung der Aufnahmesitze des Batteriegehäuses an den Befestigungssitzen des Rohrprofils zur schwenkbaren Bewegung des Batteriegehäuses relativ zum Rohrprofil vorgesehen sein. Vorzugsweise ist dafür an jedem Aufnahmesitz ein nutförmiger Führungsabschnitt ausgebildet, der mit einem dazu korrespondierenden Positionierstift eines Befestigungssitzes zusammenwirkt. Das Batteriegehäuse kann nach dem Anlegen bzw. Aufsetzen der Scharniergeometrien, also nach dem Anlegen der Längskante des Rohrprofils und der korrespondierenden Längskante des Batteriegehäuses, um eine in Längsrichtung des Rohrprofils verlaufende Achse relativ zum Rohrprofil verschwenkt werden und durch diese Drehbewegung in den Aufnahmeraum eingesetzt werden. Der Führungsabschnitt des Aufnahmesitzes kann bei dem Auflegen der korrespondierenden Scharniergeometrien und/oder während der Dreh- bzw. Schwenkbewegung des Batteriegehäuses mit dem Positionierstift eines Befestigungssitzes in Eingriff gelangen. Der Positionierstift wird dann in dem Führungsabschnitt bzw. entlang des Führungsabschnitts geführt, so dass die Drehbewegung durch das Zusammenspiel des Führungsabschnitts mit dem Positionierstift unterstützt wird. Der Führungsabschnitt dient dabei im Zusammenspiel mit dem Positionierstift als Führung für die Dreh- bzw. Schwenkbewegung. Zum Herausnehmen wird das Batteriegehäuse in die entgegengesetzte Richtung um die Drehachse relativ zum Aufnahmeraum verschwenkt, so dass der Positionierstift und der Führungsabschnitt außer Eingriff gebracht werden. Das Batteriegehäuse kann dann nach dem Verschwenken abgenommen bzw. aus dem Aufnahmeraum entnommen werden, indem die Längskanten von dem Rohrprofil und dem Batteriegehäuse, also die Scharniergeometrien, außer Eingriff gebracht werden. Die Längskanten des Rohrprofils und der des Batteriegehäuses können dann voneinander wegbewegt und/oder getrennt werden. Das Schwenken bzw. Verdrehen des Batteriegehäuses in den Aufnahmeraum bzw. aus dem Aufnahmeraum erfolgt vorzugsweise um die Scharnierrippe.

Vorzugsweise ist der Führungsabschnitt bogenförmig nach innen gerichtet und/oder wird wenigstens einseitig von einem bogenförmigen Führungssteg an dem Aufnahmesitz zum Führen der Einsetzbewegung des Batteriegehäuses in den Aufnahmeraum begrenzt. Der Führungsabschnitt unterstützt die Schwenkbewegung des Batteriegehäuses beim Einsetzen in den Aufnahmeraum, indem die Bewegung des Batteriegehäuses beim Einsetzen beschränkt und/oder geführt wird. Der Führungsabschnitt ist somit im Wesentlichen zum Führen der Drehbewegung des Batteriegehäuses beim Einsetzen und Entnehmen ausgebildet. Nach dem Anlegen der Scharniergeometrien des Rohrprofils und des Batteriegehäuses gegeneinander geraten der Führungsabschnitt bzw. der bogenförmige Führungssteg und der Positionierstift eines Befestigungssitzes in Eingriff. Der Führungsabschnitt unterstützt dabei die Schwenkbewegung des Batteriegehäuses beim Einschwenken in den Aufnahmeraum und beim Drehen zur Entnahme aus dem Aufnahmeraum. Auf diese Weise ist sichergestellt, dass das Batteriegehäuse die vorgesehene Position beim Einsetzen erreicht, wodurch das Einsetzen und die Entnahme des Batteriegehäuses in den Aufnahmeraum deutlich erleichtert wird.

Bevorzugt ist an wenigstens einem Aufnahmesitz und/oder Befestigungssitz wenigstens ein Anschlag zur Festlegung der Endposition des Batteriegehäuses in dem Aufnahmeraum vorgesehen. Der Anschlag kann mit einer komplementären Ausnehmung an wenigsten einem Aufnahmesitz und/oder Befestigungssitz zusammenwirken. Beim Erreichen der Endposition des Batteriegehäuses in dem Aufnahmeraum kann der Anschlag seitlich in die komplementäre Ausnehmung eingreifen und so die Drehbewegung beim Einsetzen des Batteriegehäuses relativ zum Rohrprofil begrenzen.

Bevorzugt ist ein Verriegelungsmechanismus vorgesehen, vorzugsweise integriert in das Rohrprofil, zum vorzugsweise form- und/oder kraftschlüssigen Festsetzen des Batteriegehäuses in dem Rohrprofil. Der Verriegelungsmechanismus kann derart ausgebildet sein, dass das Batteriegehäuse beim Einsetzen in den Aufnahmeraum mit Erreichen der Endposition automatisch in dem Aufnahmeraum verriegelt bzw. festgesetzt wird. Das Festsetzen bzw. Verriegeln kann beispielsweise über einen Rastmechanismus erfolgen, der automatisch beim Erreichen der Endposition ausgelöst wird. Hierfür kann beispielsweise ein Verriegelungsbolzen vorgesehen sein, der formschlüssig in einer Ausnehmung des Batteriegehäuses, vorzugsweise in einer Ausnehmung eines Aufnahmesitzes, einrastet. Mit einem Entriegelungselement, beispielsweise einem Schlüssel, kann der Verriegelungsmechanismus zur Entnahme des Batteriegehäuses entriegelt werden, um das Batteriegehäuse aus dem Aufnahmeraum entnehmen zu können. Alternativ kann auch ein Verriegelungsmechanismus vorgesehen sein, bei dem zum Verriegeln bzw. Festsetzen des Batteriegehäuses in dem Aufnahmeraum ein Verriegelungselement, beispielsweise ein Schlüssel, betätigt werden muss.

Der Verriegelungsmechanismus wirkt beim Verriegeln vorzugsweise mit einem Aufnahmesitz zusammen. Ein Aufnahmesitz kann dafür eine Verriegelungsnut, beispielsweise ein Rundloch, aufweisen, in die ein Verriegelungsbolzen des Verriegelungsmechanismus im verriegelten Zustand formschlüssig eingreift. Der Verriegelungsbolzen kann dabei durch den Befestigungssitz geführt werden und den Befestigungssitz durchdringen. Vorzugsweise ist ein Verriegelungsmechanismus vorgesehen, der mit einem Aufnahmesitz und einem Befestigungssitz zusammenwirkt und für eine einseitige Verriegelung des Batteriegehäuses sorgt. Alternativ kann der Verriegelungsmechanismus auch zur beidseitigen, vorzugsweise stirnseitigen, Verriegelung des Batteriegehäuses ausgebildet sein. Grundsätzlich können als Verriegelungsmechanismus herkömmliche Schloss- und/oder Verriegelungssysteme verwendet werden. Der Verriegelungsmechanismus kann beispielsweise mit einem Schlüssel oder über eine Zahlenkombination betätigt und gesichert und/oder entsichert werden.

Bevorzug wirkt das Batteriegehäuses bei Erreichen einer Endposition im Aufnahmeraum gegen ein Federelement und ist in der verriegelten Endposition federbelastet. Das Federelement wird dabei beim Einsetzen des Batteriegehäuses in den Aufnahmeraum zunehmend gespannt und übt in der Endposition des Batteriegehäuses eine konstante Kraft auf das Batteriegehäuse auf. Im verriegelten Zustand wird das Batteriegehäuse gegen die Federkraft in dem Aufnahmeraum gehalten. Wird der Verriegelungsmechanismus entriegelt, bewirkt die Feder, dass das Batteriegehäuse in einer Drehbewegung (in entgegengesetzter Drehrichtung zum Einsetzen des Batteriegehäuses in den Aufnahmeraum) aus der Endposition bewegt wird. Dabei wird das Batteriegehäuse relativ zum Rohrprofil gedreht, wodurch die den Aufnahmeraum begrenzenden Flachseiten des Rohrprofils und die angrenzenden Flachseiten der Profilabdeckung nicht mehr zueinander ausgefluchtet sind. Durch die Verdrehung des Batteriegehäuses relativ zum Rohrprofil entsteht dabei eine für den Benutzer greifbare Kante, so dass das Batteriegehäuse in einfacher Weise vom Benutzer ergriffen und mit einer weiteren Drehbewegung aus dem Aufnahmeraum entnommen werden kann. Die Entnahme des Batteriegehäuses wird somit deutlich vereinfacht.

In einer vorteilhaften Ausführungsform weist die Profilabdeckung außenseitig eine Befestigungseinrichtung und, vorzugsweise, eine elektrische Kontaktierung für ein zweites Batteriegehäuse auf. Somit kann auf einfache Weise bei Bedarf die Reichweite des Elektrofahrzeuges durch Nutzung einer zweiten Batterie vergrößert werden. Es wird somit die Möglichkeit geschaffen, eine modulare Anpassung der Reichweite bzw. der gespeicherten Energiemenge zu realisieren.

Vorzugsweise besteht das Rohrprofil aus einem Leichtmetallwerkstoff, insbesondere aus Aluminium. Das Rohrprofil ist somit frei von Stahleinlagen. Vorzugsweise ist das Rohrprofil als Aluminiumrohr extrudiert.

Die zuvor beschriebenen Ausführungsformen der Erfindung können bedarfsweise miteinander kombiniert werden, auch wenn dies nicht im Einzelnen ausdrücklich erwähnt ist. Der Offenbarungsgehalt der Erfindung ist nicht auf die durch die gewählte Absatzformatierung vorgegebenen Kombinationen von Erfindungsmerkmalen beschränkt.

Im Folgenden wird die Erfindung anhand eines Ausführungsbeispiels unter Bezugnahme auf die Figuren näher erläutert. Die Erfindung ist nicht auf die gezeigte Ausführungsform beschränkt. Merkmale der beschriebenen und gezeigten Ausführungsformen können bedarfsweise miteinander kombiniert werden, auch wenn dies nicht im Einzelnen ausdrücklich beschrieben ist.

Es zeigen:
- Fig. 1: eine perspektivische Ansicht eines Unterrohrs eines Fahrradrahmens mit einem integrierten Batteriegehäuse,
- Fig. 2: eine weitere perspektivische Darstellung des in Fig. 1 gezeigten Unterrohrs in einer um 180° zur Einbaulage im Fahrradrahmen gedrehten Ansicht,
- Fig. 3: eine perspektivische Darstellung des in Fig. 1 gezeigten Unterrohrs, wobei das Batteriegehäuse in einem entnommenen Zustand dargestellt ist,
- Fig. 4: eine weitere perspektivische Darstellung des in Fig. 2 gezeigten Unterrohrs mit dem entnommenen Batteriegehäuse,
- Fig. 5: eine Querschnittsansicht des Rohrprofils des Unterrohrs ohne Einbauten in der in Fig. 4 gezeigten Schnittebene V-V, wobei an das Rohrprofil ein rechteckförmiges Referenzprofil angelegt ist,
- Fig. 6: eine schematische Teil-Ansicht des in Fig. 1 gezeigten Unterrohrs mit einer Aussparung, wobei das Batteriegehäuse relativ zum Unterrohr verdrehbar ist und eine Position des Batteriegehäuses bei einer Einsetzbewegung bzw. einer Entnahmebewegung darstellt ist,
- Fig. 7: eine schematische Draufsicht auf zwei Befestigungssitze des in Fig. 1 gezeigten Unterrohrs,
- Fig. 8: eine schematische Draufsicht auf zwei Aufnahmesitze des in Fig. 1 gezeigten Unterrohrs und
- Fig. 9: eine Querschnittsansicht des Unterrohrs und des Batteriegehäuses in der in Fig. 2 gezeigten Schnittebene IX-IX in der Einbaulage im Fahrradrahmen.

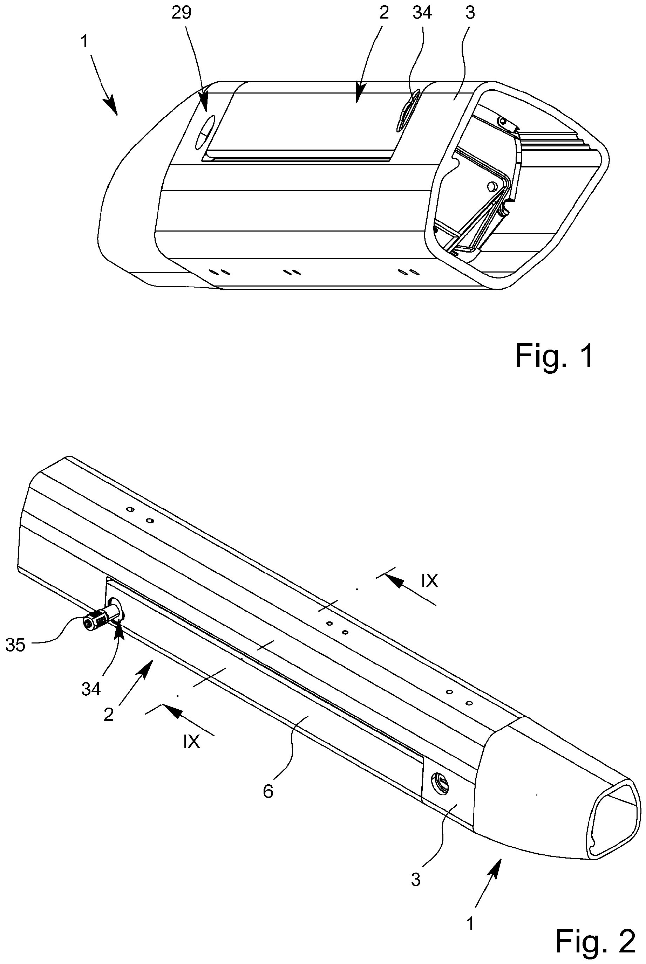

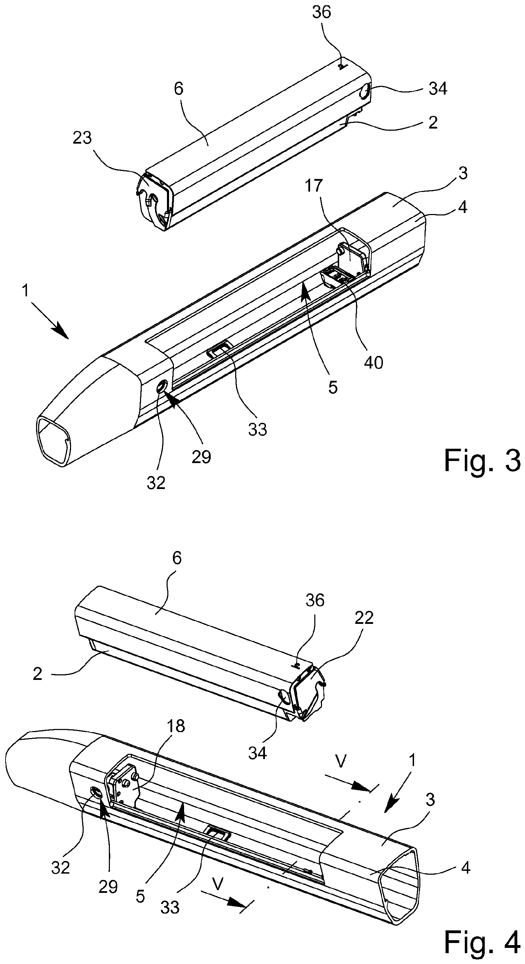

In Fig. 1 und Fig. 2 ist ein Unterrohr 1 eines Fahrradrahmens mit einem integrierten Batteriegehäuse 2 dargestellt. Die Figuren 3 und 4 zeigen jeweils das Rohrprofil 3 aus Fig. 1 sowie das vollständig entnommene Batteriegehäuse 2. Das Unterrohr 1 weist in einem Abschnitt einer Längskante 4 einen freigeschnittenen Längskantenbereich auf, wobei über den freigeschnittenen Längskantenbereich ein Aufnahmeraum 5 zur Aufnahme des Batteriegehäuses 2 zugänglich ist. An dem Batteriegehäuse 2 ist eine Profilabdeckung 6 angebracht bzw. befestigt, die den Aufnahmeraum 5 in einem eingesetzten Zustand des Batteriegehäuses 2 verschließt, wie in Fig. 1 gezeigt ist. Durch die Profilabdeckung 6 kann der Aufnahmeraum 5 vor dem Eindringen von Wasser, beispielsweise Spritzwasser, und Schmutz wirkungsvoll geschützt werden.

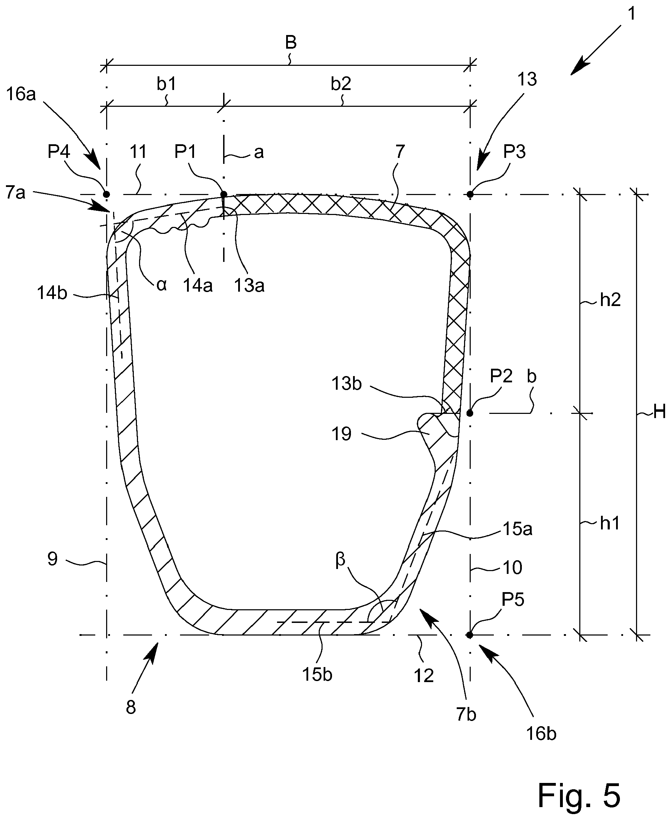

Fig. 5 zeigt eine Querschnittsansicht des Rohrprofils 3 ohne Einbauten in der in Fig. 4 gezeigten Schnittebene V-V. Wie sich aus Fig. 5 ergibt, erstreckt sich eine Aussparung 7 des Rohrprofils 3 zum Einsetzen des Batteriegehäuses 2 über lediglich einen aus- bzw. freigeschnittenen Längskantenbereich des Rohrprofils 2 und grenzt an zwei nicht-freigeschnittene Längskantenbereiche 7a, 7b an. Durch die Freischneidung lediglich eines Längskantenbereichs wird eine hohe Stabilität und Steifigkeit des Rohrprofils 2 sichergestellt. In Längsrichtung des Rohrprofils 2 angrenzend an den freigeschnittenen Längskantenbereich ist das Rohrprofil 2 in Umfangsrichtung als Vollprofil ausgebildet. Der freigeschnittene Profilabschnitt des Rohrprofils 2 ist in Fig. 5 zur Visualisierung in einer Kreuzschraffur dargestellt.

In die Querschnittsansicht von Fig. 5 ist zusätzlich ein Referenzprofil 8 eingezeichnet, das durch zwei an die Außenkontur des Rohrprofils 2 gelegte vertikale geradlinige Begrenzungslinien 9, 10 und zwei an die Außenkontur des Rohrprofils 2 gelegte horizontale geradlinige Begrenzungslinien 11, 12 gebildet wird. Die Begrenzungslinien 9,10,11,12 bilden ein Rechteck, das tangential an die Außenflächen des Rohrprofils 3 angelegt ist. Das Referenzprofil 8 begrenzt somit das Rohrprofil 3 nach außen, wobei das Rohrprofil 3 mit Bezug auf die Querschnittsansicht vollständig innerhalb des Referenzprofils 8 liegt.

Erfindungsgemäß erstreckt sich die Aussparung 7 lediglich über einen Eckbereich 13 des Referenzprofils 8. Der freigeschnittene Längskantenbereich des Rohrprofils 3 liegt dem Eckbereich 13 gegenüber. Der Eckbereich 13 wird gebildet durch die sich schneidenden Begrenzungslinien 10, 11 des Referenzprofils 8.

In der Querschnittsansicht gemäß Fig. 5 wird die Aussparung 7 in Umfangsrichtung in der einen Richtung begrenzt durch einen ersten Längsrand 13a des Rohrprofils 3 und in der anderen Richtung durch einen zweiten Längsrand 13b des Rohrprofils 3. Zwischen den Längsrändern 13a, 13b lässt sich das Batteriegehäuse 2 in die Aussparung 7 einsetzen. Eine in der Querschnittsansicht an den ersten Längsrand 13a gelegte vertikale Tangente a schneidet eine horizontale Begrenzungslinie 11 des Eckbereichs 13 im Schnittpunkt P1 und eine an den zweiten Längsrand 13b gelegte horizontale Tangente b schneidet die vertikale Begrenzungslinie 10 im Schnittpunkt P2. Die Aussparung 7 erstreckt sich somit bezogen auf die Begrenzungslinien 13a, 13b zwischen diesen Schnittpunkten und lediglich über einen Eckbereich 13 des Referenzprofils 8.

Bezogen auf die Schnittpunkte der zuvor beschriebenen Tangenten a, b mit den Begrenzungslinien 13a, 13b erstreckt sich die Aussparung 7 lediglich über eine Teillänge der horizontale Begrenzungslinie 11 und über eine Teillänge der vertikalen Begrenzungslinie 10 des Eckbereichs 13. Die Aussparung 7 im Rohrprofil erstreckt sich somit lediglich über einen Teil der Gesamthöhe H und lediglich über einen Teil der Gesamtbreite B des Referenzprofils 8.

Die nicht-freigeschnittenen Längskantenbereiche 7a, 7b werden jeweils durch zwei ineinander übergehende zueinander abgewinkelte oder abgebogene Wandabschnitte 14a, 14b bzw. 15a, 15b des Rohrprofils 3 gebildet. Die Wandabschnitte 14a, 14b bzw. 15a, 15b sind unterschiedlichen Begrenzungslinien 9, 10, 11, 12 zugewandt. Der Innenwinkel α, β zwischen zwei Wandabschnitten 14a, 14b bzw. 15a, 15b eines nicht-freigeschnittenen Längskantenbereichs 7a, 7b kann 80° bis 135°, weiter bevorzugt 85° bis 120°, bevorzugt 90° bis 115°, betragen.

Das Verhältnis der Breite b1 bzw. Höhe h1 eines der Aussparung 7 zugewandten streifenförmigen Wandabschnitts 14a, 15a bzw. Randstreifens zur Breite b2 bzw. Höhe h2 der Aussparung 7 kann bezogen auf das Referenzprofil 8 zwischen 0,2 und 0,75, vorzugsweise zwischen 0,25 und 0,5, betragen. Damit weist jeder Randstreifen eine ausreichende Erstreckung in Umfangsrichtung auf, um eine hohe Stabilität und Steifigkeit des Rohrprofils 3 trotz der Aussparung 7 sicherstellen zu können. Die Breite b2 der Aussparung 7 bezieht sich auf den Abstand zwischen dem Tangentenschnittpunkt P1 und einem Eckpunkt P3 des Eckbereichs 13, während sich die Höhe h2 der Aussparung 7 auf den Abstand zwischen dem Tangentenschnittpunkt P2 und dem Eckpunkt P3 bezieht. Die Breite b1 des Wandabschnitts 14a, 15a bezieht sich auf den Abstand des jeweiligen Tangentenschnittpunkts P1, P2 von einem Eckpunkt P4, P5 eines benachbarten Eckbereichs 16a, 16b des Referenzprofils 8, der einem angrenzenden nicht-freigeschnittenen Längskantenbereich 7a , 7b gegenüberliegt.

Wie aus den Fig. 3 und Fig. 4 ersichtlich, ist der Aufnahmeraum 5 in Längsrichtung durch jeweils einen Befestigungssitz 17, 18 begrenzt. Durch die Befestigungssitze 17, 18 wird das Batteriegehäuse 2 in Längsrichtung des Unterrohrs 1 fixiert und gehalten.

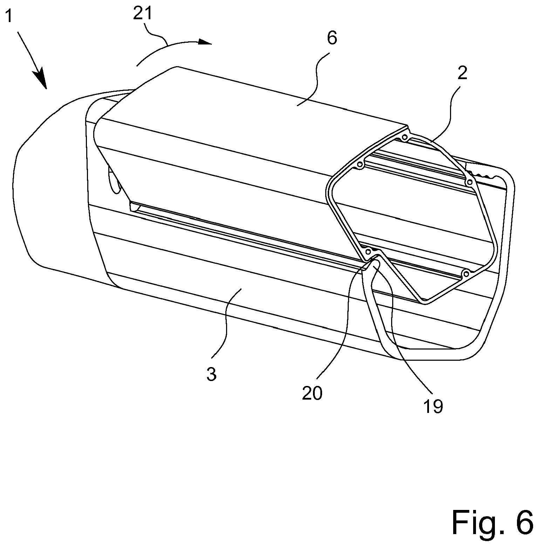

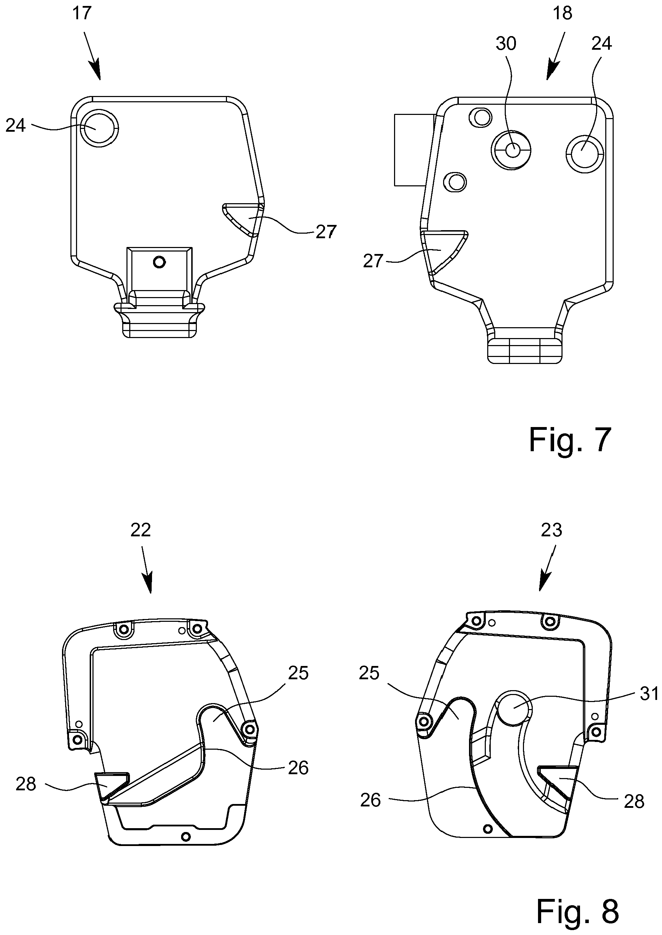

Anhand Fig. 6 soll das Einsetzen des Batteriegehäuses 2 in den Aufnahmeraum 5 beschrieben werden. Das Rohrprofil 3 weist im Bereich des Aufnahmeraums 5 an einer Längskante eine Scharnierrippe 19 als eine erste Scharniergeometrie auf. Das Batteriegehäuse 2 weist eine dazu komplementär ausgebildete Längsnut 20 als Scharniergeometrie auf. Werden die beiden Scharniergeometrien beim Einsetzen des Batteriegehäuses 2 aufeinandergesetzt, bilden das Batteriegehäuse 2 und das Rohrprofil 3 eine freie gelenkige Verbindung zwischen den beiden Bauteilen aus, ohne dass das Rohrprofil 3 und das Batteriegehäuse 2 über eine starre Achse miteinander festverbunden sind. Das Batteriegehäuse 2 kann mit seiner Scharniernut 20 relativ zum Rohrprofil 8 um die Scharnierrippe 19 verdreht werden. Beim Drehen des Batteriegehäuses 2 relativ zum Rohrprofil 8 in Richtung des Pfeils 21 wird das Batteriegehäuse 2 in das Rohrprofil 8 bzw. in den Aufnahmeraum 5 des Unterrohrs 1 eingesetzt. Zur Unterstützung der Drehbewegung bzw. der Einsetzbewegung ist an den Stirnseiten des Batteriegehäuses 2 jeweils ein Aufnahmesitz 22, 23 (Fig. 3, 4) vorgesehen, der jeweils mit einem Befestigungssitz 17, 18 zusammenwirkt. In Fig. 7 sind die Befestigungssitze 17, 18 in einer Draufsicht dargestellt. In Fig. 8 sind die mit den in Fig. 8 dargestellten Befestigungssitzen 17, 18 zusammenwirkenden Aufnahmesitze 22, 23 gezeigt.

Jeder Befestigungssitz 17, 18 weist jeweils einen Positionierstift 24 auf. Beim Einsetzen des Batteriegehäuses 2 in den Aufnahmeraum 5 geraten die Positionierstifte 24 mit einem vorzugsweise nutförmigen Führungsabschnitt 25 der Aufnahmesitze 22, 23 in Eingriff. Die Positionierstifte 24 und die Führungsabschnitte 25 bilden dabei eine Kulissenführung zwischen den Aufnahmesitzen 22,23 des Batteriegehäuses 2 und den Befestigungssitzen 17,18 des Rohrprofils 3 zur geführten schwenkbaren Bewegung des Batteriegehäuses 2 relativ zum Rohrprofil 3.

Beim Einsetzen des Batteriegehäuses 2 in den Aufnahmeraum 5 werden demnach zuerst die Scharniergeometrien, also die Scharniernut 20 und die Scharnierrippe 19, gegeneinander angelegt. Beim Anlegen der Scharniergeometrien oder bei der anschließenden Drehbewegung in Richtung des Pfeils 11 geraten die Positionierstifte 24 und die Führungsabschnitte 25 in gegenseitigen Eingriff und bilden eine Kulissenführung aus. Durch die Kulissenführung wird die Bewegung des Batteriegehäuses vorgegeben, wobei der Führungsabschnitt 25 zur Führung bei der Dreh- bzw. Schwenkbewegung dient. Der Führungsabschnitt 25 ist dabei bogenförmig nach innen gerichtet und bildet einen bogenförmigen Führungssteg 26 aus.

Die Befestigungssitze 17, 18 weisen jeweils einen Anschlag 27 zur Festlegung der Endposition des Batteriegehäuses 2 in dem Aufnahmeraum 5 auf. Dafür weisen die Aufnahmesitze 22, 23 jeweils eine vorzugsweise nutförmige Begrenzungsöffnung 28 auf, wobei der komplementär ausgebildete Anschlag 27 eines Befestigungssitzes 17, 18 bei Erreichen der Endposition des Batteriegehäuses 2 in dem Aufnahmeraum 5 seitlich in die Begrenzungsöffnung 28 eingreift. Auf diese Weise kann der Nutzer die richtige Position des eingesetzten Batteriegehäuses 2 daran erkennen, dass die Einsetzbewegung durch den Anschlag 27 begrenzt ist.

In dem Unterrohr 1 kann ein Verriegelungsmechanismus 29 vorgesehen sein (vgl. Fig. 1, Fig. 3 und Fig. 4) zum vorzugsweise form- und/oder kraftschlüssigen Festsetzen des Batteriegehäuses 2 in dem Rohrprofil 3. Wenigstens ein Befestigungssitz 18 kann einen Verriegelungsbolzen 30 aufweisen, der mit einer Verriegelungsnut 31 des Aufnahmesitzes 23 zusammenwirkt. Beim Einsetzen des Batteriegehäuses 2 in den Aufnahmeraum 5 wird das Batteriegehäuse 2 in die Endposition bewegt, in der der Verriegelungsbolzen 30 und die Verriegelungsnut 31 deckungsgleich sind, so dass der Verriegelungsbolzen 30 in die Verriegelungsnut 31 eindringen kann, um das Batteriegehäuse 2 in dem Aufnahmeraum 5 festzusetzen. Der Verriegelungsbolzen 30 kann dabei automatisch beim Erreichen der Endposition in die Verriegelungsnut 31 einrasten.

Alternativ kann der Verriegelungsbolzen 30 durch Betätigung eines nicht dargestellten Schlüssels in die Verriegelungsnut 31 geführt werden. Dafür weist das Unterrohr 1 eine Öffnung 32, ausgebildet als Schlüsselloch, auf. Zur Entnahme des Batteriegehäuses 2 aus dem Aufnahmeraum 5 muss der Verriegelungsmechanismus 29 zunächst mit Hilfe eines Schlüssels entriegelt werden, um die Entnahme des Batteriegehäuses 2 zu ermöglichen. Beim Entriegeln des Verriegelungsmechanismus 29 wird dabei der Verriegelungsbolzen 30 aus der Verriegelungsnut 31 bewegt, so dass Anschließend das Batteriegehäuse 2 entgegen der Bewegungsrichtung des Pfeils 21 geschwenkt und aus dem Aufnahmeraum 5 entnommen werden kann.

Um die Entnahme des Batteriegehäuses 2 aus dem Aufnahmeraum 5 zu erleichtern, ist in dem Aufnahmeraum 5 ein Federelement 33 vorgesehen und an dem Rohrprofil 3 befestigt, das in der vollständig eingesetzten Endposition des Batteriegehäuses 2 gespannt ist und gegen das Batteriegehäuse 2 wirkt. Wird der Verriegelungsmechanismus 29 dann entsichert, drückt das Federelement 33 das Batteriegehäuse 2 aus der Endposition in einer Drehbewegung entgegen der Richtung von Pfeil 21. Dadurch sind die Außenfläche der Abdeckung 6 und angrenzende Außenflächen des Rohrprofils 3 nicht länger ausgefluchtet. Zwischen den Außenflächen wird durch das federinduzierte Ausdrehen oder Aufklappen des Batteriegehäuses 2 eine Kante gebildet, die von einem Benutzer leicht ergriffen werden kann, so dass der Benutzer das Batteriegehäuse 2 entnehmen kann. Die Einsetzbewegung des Batteriegehäuses 2 in den Aufnahmeraum 5 erfolgt dann gegen die Federkraft des Federelementes 33.

Das Batteriegehäuse 2 weist eine Öffnung 34 für ein Ladekabel 35 auf, das in den Figuren 2, 5 und 9 lediglich schematisch dargestellt ist. Die Batterie kann also sowohl im entnommenen als auch im eingesetzten Zustand geladen werden. Darüber hinaus weist das Batteriegehäuse 2 eine Anzeige 36 zur Anzeige des Ladezustandes der Batterie auf.

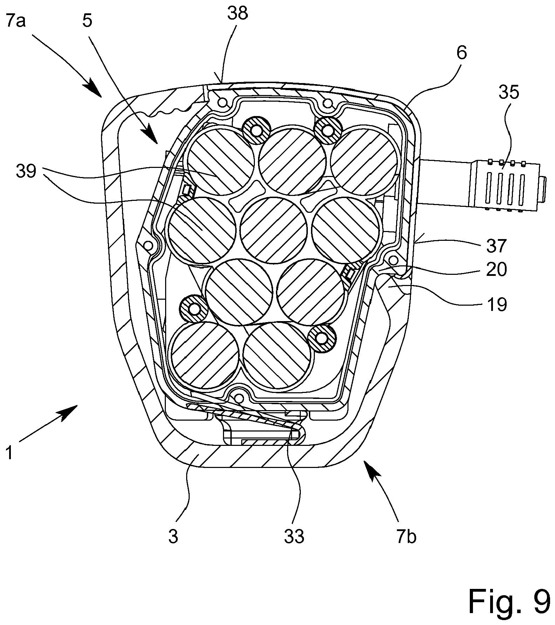

In Fig. 9 ist eine Querschnittsansicht des in Fig. 2 gezeigten Unterrohrs 1 entlang des Schnitts IX-IX mit einem integrierten Batteriegehäuse 2 dargestellt. Wie Fig. 9 entnommen werden kann, sind die Außenflächen der nicht freigeschnittenen Längskantenbereiche 7a, 7b des Rohrprofils 2 und angrenzende Längsflächen 37, 38 der Profilabdeckung 6 im Wesentlichen ausgefluchtet. Im Inneren des Batteriegehäuses 2 ist eine Vielzahl von Batteriezellen 39 angeordnet. Das Federelement 33 ist in dem in Fig. 9 gezeigten Zustand durch das integrierte Batteriegehäuses 2 vorgespannt und übt eine Druckkraft auf das Batteriegehäuse 2 auf.

Der Aufnahmeraum 5 weist gemäß Fig. 3 zudem einen Anschlusskontakt 40 zur elektrischen Verbindung mit der Batterie des Batteriegehäuses 2 auf.

**Bezugszeichenliste:**

| | | | |
|---|---|---|---|
| 1 | Unterrohr | 18 | Befestigungssitz |
| 2 | Batteriegehäuse | 19 | Scharnierrippe |
| 3 | Rohrprofil | 20 | Scharniernut |
| 4 | Längskante | 21 | Pfeil |
| 5 | Aufnahmeraum | 22 | Aufnahmesitz |
| 6 | Profilabdeckung | 23 | Aufnahmesitz |
| 7 | Aussparung | 24 | Positionierstift |
| 7a | Längskantenbereich | 25 | Führungsabschnitt |
| 7b | Längskantenbereich | 26 | Führungssteg |
| 8 | Referenzprofil | 27 | Anschlag |
| 9 | Begrenzungslinie | 28 | Begrenzungsöffnung |
| 10 | Begrenzungslinie | 29 | Verriegelungsmechanismus |
| 11 | Begrenzungslinie | 30 | Verriegelungsbolzen |
| 12 | Begrenzungslinie | 31 | Verriegelungsnut |
| 13 | Eckbereich | 32 | Öffnung |
| 13a | Längsrand | 33 | Federelement |
| 13b | Längsrand | 34 | Öffnung |
| 14a | Wandabschnitt | 35 | Ladekabel |
| 14b | Wandabschnitt | 36 | Anzeige |
| 15a | Wandabschnitt | 37 | Längsfläche |
| 15b | Wandabschnitt | 38 | Längsfläche |
| 16a | Eckbereich | 39 | Batteriezelle |
| 16b | Eckbereich | 40 | Anschlusskontakt |
| 17 | Befestigungssitz | | |

## Patentansprüche

1. Implementierungsstruktur zum Integrieren eines Batteriegehäuses (2) in ein Rohrprofil (3) eines Fahrzeugrahmens eines Elektrofahrzeuges, insbesondere zum Integrieren eines Batteriegehäuses (2) in ein Rohrprofil (3) eines Elektrofahrrades, weiter insbesondere in ein Unterrohr (1) des Elektrofahrrades, mit einem Rohrprofil (3) und einem Batteriegehäuse (2), wobei das Rohrprofil (3) einen Aufnahmeraum (5) für das Batteriegehäuse (2) bildet und das Batteriegehäuse (2) über eine Aussparung (7) des Rohrprofils (3) als Entlade- und Beladeöffnung in den Aufnahmeraum (5) einbringbar ist,
**dadurch gekennzeichnet,**
**dass** sich die Aussparung (7) zum Einsetzen des Batteriegehäuses (2) über lediglich einen freigeschnittenen Längskantenbereich erstreckt.

2. Implementierungsstruktur zum Integrieren eines Batteriegehäuses (2) in ein Rohrprofil (3) eines Fahrzeugrahmens eines Elektrofahrzeuges, insbesondere zum Integrieren eines Batteriegehäuses (2) in ein Rohrprofil (3) eines Elektrofahrrades, weiter insbesondere in ein Unterrohr (1) des Elektrofahrrades, mit einem Rohrprofil (3) und einem Batteriegehäuse (2), wobei das Rohrprofil (3) einen Aufnahmeraum (5) für das Batteriegehäuse (2) bildet und das Batteriegehäuse (2) über eine Aussparung (7) des Rohrprofils (3) als Entlade- und Beladeöffnung in den Aufnahmeraum (5) einbringbar ist, insbesondere nach Anspruch 1,
**dadurch gekennzeichnet,**
**dass** das Batteriegehäuse (2) durch Drehung um eine Längsachse des Batteriegehäuses (2) in den Aufnahmeraum (5) einschwenkbar ist.

3. Implementierungsstruktur nach Anspruch 1 oder 2, **dadurch gekennzeichnet, dass** das Batteriegehäuse (2) eine erste Scharniergeometrie und das Rohrprofil (3) eine zweite Scharniergeometrie aufweisen und dass durch Aufsetzen und/oder Anlegen der Scharniergeometrien eine vorzugsweise lösbare Profilform-Scharnierverbindung ausgebildet wird.

4. Implementierungsstruktur nach einem der vorhergehenden Ansprüche, **dadurch gekennzeichnet, dass** die Aussparung (7) von zwei angrenzenden nicht-freigeschnittenen Längskantenbereichen (7a, 7b) des Rohrprofils (3) begrenzt wird, wobei jeder nicht-freigeschnittener Längskantenbereich (7a, 7b) durch zwei ineinander übergehende zueinander abgewinkelte oder abgebogene Wandabschnitte (14a, 14b, 15a, 15b) des Rohrprofils (3) gebildet wird.

5. Implementierungsstruktur nach einem der vorhergehenden Ansprüche, **dadurch gekennzeichnet, dass** das Rohrprofil (3) zwei im Inneren des Rohrprofils (3) angeordnete Befestigungssitze (17,18) für das Batteriegehäuse (2) aufweist, die in Längsrichtung des Rohrprofils (3) voneinander beabstandet sind.

6. Implementierungsstruktur nach einem der vorhergehenden Ansprüche, **dadurch gekennzeichnet, dass** eine relativ zum Rohrprofil (3) bewegbar ausgebildete Profilabdeckung (6) zum Öffnen und Verschließen des Aufnahmeraums (5) vorgesehen ist, wobei die Profilabdeckung (5) vorzugsweise lösbar mit dem Batteriegehäuse (2) verbunden ist oder wobei ein Gehäusebereich des Batteriegehäuses (2) die Profilabdeckung (5) ausbildet.

7. Implementierungsstruktur nach einem der vorhergehenden Ansprüche, **dadurch gekennzeichnet, dass** eine Kulissenführung des Batteriegehäuses (2) an dem Rohrprofil (3) vorgesehen ist zur geführten schwenkbaren Bewegung des Batteriegehäuses (2) relativ zum Rohrprofil (3).

8. Implementierungsstruktur nach einem der vorhergehenden Ansprüche, **dadurch gekennzeichnet, dass** das Batteriegehäuse (2) bei Erreichen einer Endposition im Aufnahmeraum (5) gegen ein Federelement (33) wirkt und in der verriegelten Endposition federbelastet ist.

9. Implementierungsstruktur nach einem der vorhergehenden Ansprüche, **dadurch gekennzeichnet, dass** die Profilabdeckung (6) außenseitig eine Befestigungseinrichtung für ein zweites Batteriegehäuse (2) aufweist.

10. Elektrofahrzeug, insbesondere Elektrofahrrad oder Elektroscooter, mit einer Implementierungsstruktur nach einem der vorhergehenden Ansprüche.
